# EUROPÄISCHE PATENTSCHRIFT

(11) **EP 2 203 576 B1**
(45) Veröffentlichungstag und Bekanntmachung des Hinweises auf die Patenterteilung: **29.05.2019**
(21) Anmeldenummer: 08839926.6
(22) Anmeldetag: 08.10.2008
(51) Int. Cl.: C23C 22/02, C23C 22/60, C23C 22/62, C23C 22/83, F16C 33/64

(54) **VERFAHREN ZUR BESCHICHTUNG EINES METALLISCHEN BAUTEILS, INSBESONDERE EINES LAGERBAUTEILS ODER PRÄZISIONSBAUTEILS, SOWIE VERFAHRENSGEMÄSS HERGESTELLTES BAUTEIL**
METHOD FOR PRODUCING A METALLIC COMPONENT, ESPECIALLY A BEARING COMPONENT OR A PRECISION COMPONENT, AND COMPONENT PRODUCED BY SAID METHOD
PROCÉDÉ DE FABRICATION D'UNE PIÈCE MÉTALLIQUE, EN PARTICULIER D'UNE PIÈCE DE PALIER OU D'UNE PIÈCE DE PRÉCISION, ET PIÈCE FABRIQUÉE SELON LEDIT PROCÉDÉ

(30) Priorität: 11.10.2007 DE 102007048750
(43) Veröffentlichungstag der Anmeldung: 07.07.2010
(73) Patentinhaber: Schaeffler Technologies AG & Co. KG, 91074 Herzogenaurach (DE)
(72) Erfinder: HAAG, Bertram, 91486 Uhlfeld (DE); WELZER, Bernd, 04209 Leipzig (DE); HOLWEGER, Walter, 78736 Trichtingen (DE); WINDRICH, Jürgen, 69181 Leimen (DE)
(86) Internationale Anmeldenummer: PCT/EP2008/063488
(87) Internationale Veröffentlichungsnummer: WO 2009/050090

(56) Entgegenhaltungen:
- EP-A- 1 284 309
- WO-A-02/090617
- CH-A5- 595 459
- DE-A1- 2 329 576
- DE-C- 685 632
- DE-C- 744 650
- GB-A- 912 128
- US-A- 2 077 450
- US-A- 3 447 974
- US-A- 3 899 367
- US-A- 4 045 253
- US-A1- 2003 205 298

## Beschreibung

### Gebiet der Erfindung

Die Erfindung betrifft ein Verfahren zur Herstellung bzw. Beschichtung eines metallischen, insbesondere aus einem Eisenwerkstoff bestehenden Bauteils, insbesondere eines Lagerbauteils oder Präzisionsbauteils für Motoren und Maschinen, vorzugsweise eines Wälzlagerbauteils oder eines Bauteils eines Riemen-, Ketten- oder Ventiltriebs.

### Hintergrund der Erfindung

Ein Bauteil, beispielsweise ein Wälzlager, besteht aus verschiedenen Bauteilen, von denen zumindest einige eine Lauffläche aufweisen, auf welcher die Wälzkörper oder ein Gleitgegenkörper im Falle eines Gleitlagers laufen. Um nach gegebenenfalls vorher durchgeführten Härtebehandlungen die Oberfläche des Lagerbauteils im Bereich der Lauffläche den geforderten konstruktiven Vorgaben anzupassen, wird das Lagerbauteil, zumindest die Lauffläche, häufig mechanisch bearbeitet, beispielsweise durch Schleifen oder Honen, gegebenenfalls gefolgt von einem Polier- und Läppschritt. Vor allem beim Schleifen bzw. Honen entstehen an der Oberfläche jedoch undefinierte, oxidische und inaktive Randschichten, beispielsweise Schleifbrand etc., bei übermäßigem Schleifen bzw. Honen wird das unter der Metalloberfläche liegende Gefüge mitunter negativ beeinflusst, was unter Belastung, also beispielsweise im Wälz- oder Gleitkontakt zum Gegenkörper, zu einer Gefügezerstörung und damit zum Verschleiß führt. Häufig entstehen auch beim Schleifen bzw. Honen feine Grate, die sich nachteilig auf die Laufeigenschaften auswirken und zu einem vorzeitigen Verschleiß führen können. Die tribomechanischen Eigenschaften der Bauteiloberfläche, also der Lauffläche, sind folglich verbesserungswürdig.

Das Dokument WO 02 / 090 617 A1 beschreibt ein Verfahren zur Vermeidung von Flecken oder Haarrissen, deren Entstehung bei der Brünierung der Bauteile vermutet wird.

Die US 3 899 367 A offenbart Zusammensetzungen und Verfahren zur Brünierung von gehärtetem Stahl, die Molybdänsäure oder Molybdänsalz enthalten.

Das Dokument US 2 077 450 A beschreibt ein Verfahren zur Behandlung eisenhaltiger metallischer Bauteile, die in eine wässrige Lösung enthaltend ein Oxidationsmittel getaucht werden.

Das Dokument EP 1 284 309 A beschreibt Komponenten und Verfahren zur Herstellung und Regeneration eines Brünierbades.

Die US 3 447 974 A offenbart eine Zusammensetzung und ein Verfahren zur Brünierung einer Oberfläche eines metallischen Bauteils.

Das Dokument US 4 045 253 A beschreibt eine Passivierung metallischer, eisenhaltiger Oberflächen in einer wässrigen Lösung mit einem pH-Wert größer von etwa 8.

Die GB 912 128 A offenbart ein Verfahren und eine Zusammensetzung zum Brünieren metallischer Bauteile.

Das Dokument CH 595 459 A5 beschreibt Schutzüberzüge auf Metallen und Legierungen unter Anwendung von Polyphenyloxid und/oder Polyphenylenoxid enthaltenden Harzen.

### Zusammenfassung der Erfindung

Der Erfindung liegt damit das Problem zugrunde, ein Verfahren anzugeben, das die Herstellung eines metallischen Bauteils mit einer Lauffläche mit verbesserten tribomechanischen Eigenschaften aufweist, so dass das metallische Bauteil verschleißfester ist.

Zur Lösung dieses Problems ist bei einem Verfahren der eingangs genannten Art erfindungsgemäß vorgesehen, dass das metallische Bauteil, insbesondere Lagerbauteil, mit einer beim Betrieb des Bauteils belasteten Lauffläche, in wenigstens einem Brünierbad enthaltend NaOH und NaNO₂ in einem Verhältnis von wenigstens 8:2 oder weniger unter Bildung einer Fe₃O₄ enthaltenden Randschicht brüniert wird, und dass das Bauteil mit einem Fluid enthaltend wenigstens eine Organo-Metall-Verbindung zur Bildung von Metalloxiden auf der Fe₃O₄-Randschicht belegt wird, wobei eine Organo-Metall-Verbindung verwendet wird, deren organische Verbindungskomponente aus der Gruppe der Acetylacetonate, Alkoholate, Silane, Aryle, Thienyle und deren Salze gewählt ist.

Bevorzugt erfolgt eine Zweibadbrünierung, wobei das Verhältnis NaOH:NaNO₂ 4:2 beträgt.

Erfindungsgemäß erfolgt eine gezielte Erzeugung randzonenbeeinflussender, triboaktiver oxidischer Verbindungen auf der Oberfläche des Bauteils. Die Erfindung schlägt eine vollkommen neuartige Behandlung von metallischen Bauteilen, insbesondere Lagerbauteilen vor, um an der Bauteiloberfläche definierte dünne oxidische Randschichten zu bilden, die passivierend wirken und tribomechanisch aktiv sind, so dass sich optimale Laufeigenschaften bei gleichzeitig verbesserter Verschleißfestigkeit ergeben.

Hierzu ist vorgesehen, dass das Bauteil in wenigstens einem Brünierbad behandelt wird. Unter "brünieren" versteht man im Allgemeinen das Tauchbrünieren, das zur Schwarzfärbung von überwiegend eisenhaltigen Werkstoffen wie Gusseisen, Schmiedeeisen oder unlegierten oder weniger hoch legierten Stählen dient. Hierzu werden die Gegenstände in hoch konzentrierte, siedende (>130°C), alkalisch-oxidierende Salzlösungen eingetaucht. Üblicherweise enthält ein Brünierbad NaOH und NaNO₂, wobei der Anteil an NaNO₂ üblicherweise maximal 20% des Anteils an NaOH beträgt. Auf der Oberfläche der Gegenstände bildet sich ein tiefschwarzer Eisenoxid-Umwandlungsüberzug, bestehend aus Fe₃O₄, Fe₂O₃ und FeO, wobei der erhaltene Schwarzton von der Werkstoffqualität, der vorherigen Oberflächenbearbeitung sowie der Art und des Zustands des Brünierbads abhängt.

Erfindungsgemäß wird nun ein Bauteil ebenfalls in einem Brünierbad bearbeitet, es handelt sich jedoch um ein "modifiziertes" Brünieren, nachdem das Verhältnis von NaOH zu NaNO₂ im Vergleich zu bekannten üblichen Brünierbädern bevorzugt zugunsten des NaNO₂ verändert wurde, das heißt, der Anteil an Na-NO₂ im Verhältnis zum NaOH-Anteil wurde deutlich angehoben. Das Verhältnis beträgt wenigstens 8:2, das heißt, der NaNO₂-Anteil beträgt wenigstens 25% des NaOH-Anteils. Im Folgenden wird stets auf den NaNO₂-Anteil Bezug genommen, wenngleich bekanntlich in einem Brünierbad NaNO₂ und NaNO₃ im Verhältnis 1:1 vorliegen. Dies ist auf kontinuierliche Oxidationsvorgänge des NaNO₂ zu NaNO₃ durch Luftsauerstoff sowie Reduktionsvorgänge des NaNO₃ zu NaNO₂ durch Sauerstoffabgabe an der Grenzfläche zum metallischen Bauteil zur Bildung des Fe₃O₄ zurückzuführen. Üblicherweise wird im Rahmen einer Brünierbadzusammensetzung jedoch der Einfachheit halber stets der NaNO₂-Gehalt angegeben, gleichbedeutend für den insgesamt gegebenen Gehalt an NaNO₂/ NaNO₃. Zudem liegen die Konzentrationen an NaOH und NaNO₂ so niedrig, dass sich eine Siedetemperatur von <120°C einstellt.

So kommt beim erfindungsgemäßen Verfahren ein Brünierbad mit einem angehobenen NaNO₂-Gehalt zum Einsatz. Dies bewirkt eine beachtliche Änderung der Reaktionskinetik. Infolge der höheren Konzentration an NaNO₂/ NaNO₃, welches das Oxidationsmittel des Brünierbads darstellt, und infolgedessen des geringeren Gehalts an NaOH ist es möglich, deutlich mehr Sauerstoff an die Grenzfläche zu transportieren, so dass sich die Geschwindigkeit der Keimbildung von Fe₃O₄-Keimen beschleunigt. Dies führt dazu, dass sich sehr viel mehr und viel feinere Eisenmischoxid-Kristallite, also Fe₃O₄-Kristallite (Magnetit) bilden. Es bildet sich also ein feinst kristallitischer Fe₃O₄-Überzug bzw. Fe₃O₄-Randschicht aus, die sehr dünn ist. Die Schichtdicke, die bevorzugt im Bereich von <800 nm liegt, ist stark von der Legierung des verwendeten Stahls (es kann nahezu jede beliebige Stahlart verwendet werden), der Wärmebehandlung und vorherigen Oberflächenbehandlung (Schleifen, Polieren, Honen etc.) abhängig. Nachdem bevorzugt eine Schichtdicke von <800 nm erreicht werden soll, hat dies letztlich auch Einfluss auf die Dauer der Brünierbadbehandlung, worauf nachfolgend noch eingegangen wird.

In jedem Fall bildet sich wie beschrieben eine sehr feine amorphe, sehr dichte Fe₃O₄-Randschicht aus. Nachdem vor allem etwaige Oberflächenunregelmä-ßigkeiten, wie beispielsweise vom Schleifen oder Honen resultierende Grate oder dergleichen, besonders aktive Reaktionszentren darstellen, bildet sich beispielsweise an einem solchen Grat in verstärktem Maß Fe₃O₄, das heißt, der Grat selbst wird verstärkt zur Fe₃O₄-Schicht umgewandelt. Aus dem vormals festen metallischen Gefüge entsteht eine Schicht, die bei Belastung "instabil" ist, was zu einem Abtrag bzw. einer Einebnung im Belastungsfall führt, worauf nachfolgend noch eingegangen wird. Grundsätzlich ist es möglich, eine Einbadbrünierung oder eine Mehrbadbrünierung durchzuführen. In jedem Fall wird die erzeugte Randschicht mittels eines Korrosionsinhibitors (vorzugsweise Öl bzw. Dewateringlösung) nachbehandelt.

Eine triboaktive Randschicht wird nun dadurch erzeugt, dass eine Organo-Metall-Verbindung gelöst, vorzugsweise in einem Öl, z.B. Parafinöl, unter Temperatureinwirkung auf der Bauteiloberfläche reagiert. Als Organo-Metall-Verbindung wird erfindungsgemäß eine solche verwendet, deren organische Verbindungskomponente aus der Gruppe der Acetylacetonate, Alkoholate, Silane, Aryle, Thienyle und deren Salze gewählt ist.

Als Metall der Organo-Metall-Verbindung kann ein beliebiges Metall der Scandiumgruppe, der Titangruppe, der Vanadiumgruppe, der Chromgruppe, der Mangangruppe, der Eisengruppe, der Kobaltgruppe, der Nickelgruppe, der Kupfergruppe oder der Zinkgruppe, oder der Erdmetallgruppe, der Kohlenstoff-Silizium-Gruppe, der Stickstoff-Phosphor-Gruppe, oder der Gruppe der Chalkogene oder der Lanthanoide oder Actinoide gewählt werden. Zweckmäßigerweise wird ein solches Metall verwendet, das leicht oxidierbar ist, und das sehr kleine und sehr feine Oxidkristallite bildet.

Selbstverständlich ist es möglich, in dem Fluid mehrere verschiedene Organo-Metall-Verbindungen einzubringen. Dies führt dazu, dass sich unterschiedliche Metalloxide auf der Bauteiloberfläche ausbilden. Aufgrund der unterschiedlichen Geometrien, Größen und Eigenschaften der einzelnen Oxide bzw. Oxidkristalle können auf diese Weise die tribomechanischen Eigenschaften der Oberfläche verändert bzw. eingestellt werden.

Das verwendete Fluid enthält zweckmäßigerweise ein Trägermedium in Form eines Alkohols, eines organischen Lösungsmittels, oder eines Öls.

Das Fluid kann ferner wenigstens ein Gleitmittel, insbesondere Dioctylsebacat oder Polyimid-Partikel enthalten. Beide sind in Bezug auf die Verschleißfestigkeit und damit Lebensdauerverlängerung zweckmäßig. Im Falle der Verwendung von Polyimid-Partikeln sollen diese eine Partikelgröße von 10nm - 10µm aufweisen und vorzugsweise in einem Mischungsverhältnis von 0,01-15 Gew.% verwendet werden. Die Polyimid-Partikel verteilen sich in den Laufflächen, werden also bereits bei der Randschichtenbildung mit eingebunden und im Betrieb dort weiter eingearbeitet. Sie dienen als Notschmiermittel, da sie unter Schmiermittelmangel eine stark verschleißmindernde Wirkung aufweisen. Neben den beschriebenen Zusätzen kann ferner ein Fluid verwendet werden, das wenigstens einen korrosionshemmenden Zusatz aufweist. Als ein solches korrosionshemmendes Additiv kann beispielsweise das unter dem Handelsnamen "IRGALUBE® 349" vertriebene Additiv verwendet werden. Bei diesem handelt es sich um eine Mischung aus Aminphosphaten, das typischerweise ca. 4,9% Phosphor und 2,7% Stickstoff enthält. Selbstverständlich ist aber auch jedes andere geeignete korrosionshemmende Additiv verwendbar.

Festzuhalten ist, dass grundsätzlich das Gleitmittel, also Dioctylsebacat, wie auch das korrosionshemmende Additiv, hier das Additiv "Irgalube® 349" optional sind und nicht zwangsläufig im Fluid enthalten sein müssen.

Die Behandlung mit dem Fluid selbst erfolgt zweckmäßigerweise ebenfalls in einem Fluidbad, also ebenfalls bevorzugt in einem Tauchvorgang. Die Behandlungsdauer sollte zwischen 1-180 min betragen, wobei sich - wie auch im Falle der Bildung der Fe₃O₄-Randschicht - mit zunehmender Behandlungsdauer die Aufwachsgeschwindigkeit der jeweiligen Randschicht vermindert. In jedem Fall sollte auch hier die Behandlungsdauer so lange gewählt werden, dass die Dicke der Metalloxidschicht wenigstens 5nm, insbesondere 10-500nm, beträgt. Die Fluidtemperatur sollte zwischen 20-140°C, insbesondere bis 120°C, betragen.

Der Brünierbehandlung zur Ausbildung der Fe₃O₄-Randschicht schließt sich also erfindungsgemäß unmittelbar oder nach Zwischenschaltung eines oder mehrerer Spülschritte oder dergleichen, worauf nachfolgend ebenfalls noch eingegangen wird, ein Behandlungsschritt an, in dem das bereits brünierte Lagerbauteil mit einem Fluid, das wenigstens eine Organo-Metall-Verbindung enthält, behandelt wird, beispielsweise ebenfalls in einem Tauchbad. Nach dem Aufbringen des Fluids, bei dem es sich insbesondere um ein Öl handelt bzw. dessen Trägermedium bevorzugt ein Öl ist, lagern sich die Teilchen der Organo-Metall-Verbindung auf der Fe₃O₄-Fläche ab. Dort erfolgt eine Oxidation, so dass sich das entsprechende Metalloxid bildet. Es ist anzunehmen, dass die Oxidation durch das Fe₃O₄ erfolgt, das sich grenzschichtnah zu Fe₂O₃ wandelt. Diese Oxidation führt dazu, dass sich eine Randschicht oder ein Überzug aus einem amorphen mikroporösen Metalloxid (AMM) bildet. Diese Metalloxidteilchen lagern sich lose auf der Fe₃O₄-Randschicht an, sie sind dort vermutlich über van-der-Waals-Kräfte oder chemische Brücken (vermutlich OH-Brücken) gebunden, jedoch nicht in einem festen Gefüge. Es bildet sich also eine weitere kristalline Randschicht auf der Fe₃O₄-Randschicht aus, wobei die äußere Metalloxid-Randschicht quasi lose gebunden auf der Fe₃O₄-Randschicht aufliegt.

Dies führt nun dazu, dass im Falle einer Belastung der Lauffläche das lose gebundene Metalloxid in die demgegenüber fester gebundene, kristallite Fe₃O₄-Randschicht eingearbeitet wird. Dies resultiert zum einen darin, dass sich eine optimale, ebene Lauffläche ausbildet, nachdem die feinst kristallite Randschicht bzw. der Randschichtverbund quasi "instabil" ist, mithin also in geringstem Maße formbar ist. Aufgrund der Umwandlung etwaiger Grate zu Fe₃O₄ werden diese hierbei eingeebnet, da sie nicht wie bisher aus einem Metallgefüge bestehen, sondern aus feinst kristallitischen Fe₃O₄-Teilchen, die gegeneinander verschoben werden können. Das heißt, aus der mechanischen Lagerbauteilbehandlung resultierende Flächenunebenheiten können auf diese Weise zusätzlich eingeebnet werden. Darüber hinaus bietet die fein kristallite Randschicht mit der extrem hohen Kristallitanzahl eine optimale Lastverteilung über die Fläche, was sich besonders vorteilhaft auf die Laufeigenschaft auswirkt. Insgesamt kann auf diese Weise ein Lagerbauteil hergestellt werden, das hinsichtlich der tribomechanischen Eigenschaften der Lauffläche optimiert ist. Die Lauffläche selbst kann in ihrer Geometrie optimal ausgeführt werden bzw. optimiert sich im Betrieb quasi von selbst, wie sich hieraus auch hervorragende Laufeigenschaften und eine deutlich verbesserte Flächenverschleißfestigkeit ergeben.

Eine gewisse Verschiebbarkeit der jeweiligen Randschichtteilchen - seien es Fe₃O₄-Kristallite oder Teilchen der Organo-Metall-Verbindung (auch hier nur lose an der Metalloberfläche gebunden (z. B. van-der-Waals-Kräfte) - ist gegeben, was tribomechanisch vorteilhaft ist.

Bevorzugt wird dem Beschichtungsprozess vorgeschaltet eine Vorbehandlung gemäß dem Stand der Technik (Entfettung und/oder Beize und/oder Feinentfettung) durchgeführt. Nach den einzelnen Prozessschritten erfolgt die Entfernung der Behandlungschemikalien durch Spülen der Bauteile in Wasser.

Durch das Herstell- bzw. Beschichtungsverfahren wird bevorzugt ein Bauteil hergestellt, bei dem es sich um ein beliebiges Lager- oder Präzisionsbauteil handelt, sei es ein Innen- oder ein Außenring, eine Hülse, eine Büchse, Wälzkörper.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine Tabelle mit relevanten erfindungsgemäßen Verfahrensschritten,
- Figur 2: eine Prinzipdarstellung eines Lagerbauteils in einer Ausschnittansicht nach dem Brünieren und der Fluidbehandlung,
- Figur 3: eine Darstellung entsprechend Figur 2 nach einer Belastung der Lauffläche.

### Ausführliche Beschreibung der Zeichnung

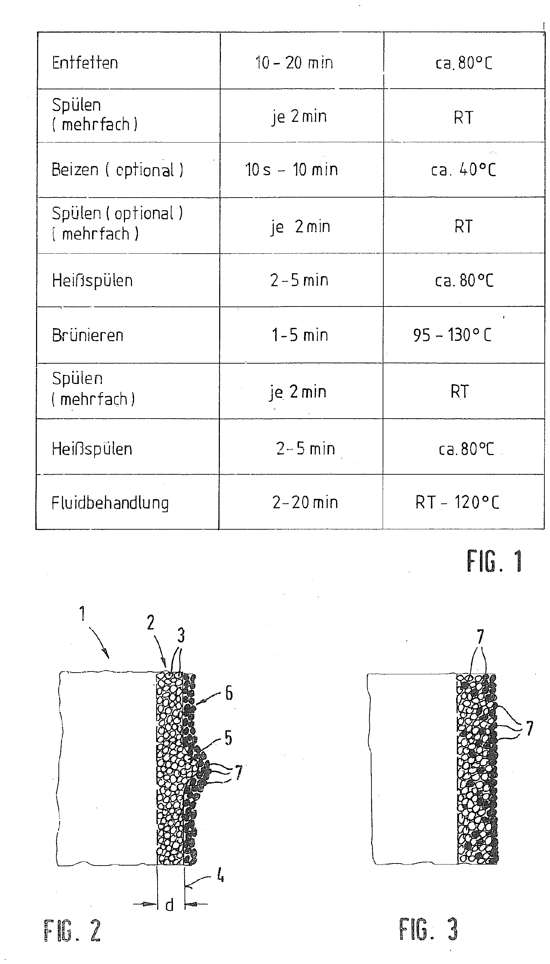

Fig. 1 zeigt tabellarisch die relevanten Verfahrensschritte, die im Rahmen der Erfindung durchzuführen sind.
Die Vorbehandlung der Bauteile erfolgt gemäß dem Stand der Technik z.B. durch Heißentfettung, Beizen und elektrolytische Entfettung.

Anschließend erfolgt eine Heißspülung, bei der ebenfalls vorzugsweise Wasser verwendet wird, mit einer Temperatur von ca. 80°C und einer Dauer von 2-5 min, um das Lagerbauteil vor dem anschließenden Brüniergang zu temperieren. Die Brünierung erfolgt vorzugsweise als Einbadbrünierung durch tauchen oder spritzen. Das Brünierbad enthält NaOH und NaNO₂, in o.g. Konzentrationsbereichen, die Dauer der Brünierung liegt zwischen 1-5 min bei einer Badtemperatur von 90-130°C (Siedetemperatur). Die Brünierungsdauer richtet sich letztlich nach der gewünschten zu erzeugenden Dicke der sich dabei bildenden Fe₃O₄-Randschicht, die Dicke sollte min. 100 nm, betragen.

Dem Brüniervorgang schließt sich ein Mehrfachspülgang an, wiederum wird hier vorzugsweise Wasser mit Raumtemperatur verwendet, jeder Spülgang beträgt ca. 2 min. Dem folgt erneut ein Heißspülgang, vorzugsweise wird hier ebenfalls Wasser mit einer Temperatur von 80°C verwendet, die Heißspülung erfolgt für die Dauer von 1-5 min.

Sodann schließt sich die Fluidbehandlung an, hierbei wird das Fluid, bevorzugt ebenfalls in einem Tauch- Spritzvorgang, auf das brünierte Lagerbauteil aufgebracht. Als Fluid kommt zweckmäßigerweise ein Gemisch aus einem Trägermedium, vorzugsweise Öl, und einer oder mehrerer Organo-Metall-Verbindungen zum Einsatz, wobei unter dem Begriff "Fluid" in diesem Zusammenhang auch eine Emulsion / Dispersion verstanden wird. Die Temperatur des Fluids sollte zwischen Raumtemperatur und ca. 120°C liegen, die Dauer der Fluidbehandlung beträgt im Beispiel zwischen 2-120 min.

An dieser Stelle ist darauf hinzuweisen, dass die angegebenen Temperaturen sowie Behandlungsdauern exemplarischer Natur sind, sie können, wie einleitend beschrieben, durchaus auch über- oder unterschritten werden.

### Brünierungsvorbehandlung

Ein Brünierbad bestehend aus 220g/l NaOH und 52g/l NaNO₂ wird auf eine Siedetemperatur von ca. 106°C erhitzt. In diese Lösung wird nun ein wie oben beschrieben vorbehandelter Lageraußenring getaucht, bis eine sichtbare Mattierung der Stahloberfläche eintritt. Die Behandlungszeit ist abhängig von der Temperatur des zu beschichtenden Bauteils und beträgt in der Regel 1-5 min. Anschließend wir das Bauteil in kaltem und heißem Wasser mehrmals gespült und abschließend in einem Dewateringfluid getaucht.

### Fluidbehandlung

Ein nach der Stand der Technik vorbehandeltes Bauteil wird in einer Lösung nach einem der Beispiele 1-5 für 60-120 min bei einer Temperatur von vorzugsweise 120°C gelagert.

### Beispiel 1:

| | | |
|---|---|---|
| Paraffinöl (PA06) | - | 10-90 Gew.% |
| Dioctylsebacat | - | 10-30 Gew.% |
| Irgalube® 349 | - | 1-20 Gew.% |
| Vanadium-Acetylacetonat | - | 0,5-10 Gew.% |
| Eisen-Acetylacetonat | - | 0,5-10 Gew.% |
| Chrom-Acetylacetonat | - | 0,5-10 Gew.% |
| Molybdän-Acetylacetonat | - | 0,5-10 Gew.% |
| Wismutacetylacetonat | - | 0,5-10 Gew.%. |

### Beispiel 2:

| | |
|---|---|
| Paraffinöl | 57,50 Gew.% |
| Dioctylsebacat | 20,00 Gew.% |
| Irgalube® 349 | 15,00 Gew.% |
| Vanadiumacetylacetonat | 2,50 Gew.% |
| Eisen (III) Acetylacetonat | 2,50 Gew.% |
| Chrom (III) Acetylacetonat | 2,50 Gew.% |

### Beispiel 3:

| | |
|---|---|
| Paraffinöl | 60,00 Gew.% |
| Dioctylsebacat | 20,00 Gew.% |
| Irgalube® 349 | 15,00 Gew.% |
| Vanadiumacetylacetonat | 1,25 Gew.% |
| Eisen (III) Acetylacetonat | 1,25 Gew.% |
| Chrom (III) Acetylacetonat | 1,25 Gew.% |
| Molybdän-Acetylacetonat | 1,25 Gew.% |

### Beispiel 4 (nicht erfindungsgemäß):

| | |
|---|---|
| Paraffinöl | 92,00 Gew.% |
| Irgalube® 349 | 5,00 Gew.% |
| Ammoniumwolframat | 1,00 Gew.% |
| Ammoniumvanadat | 1,00 Gew.% |
| Ammoniummolybdat | 1,00 Gew.% |

### Beispiel 5:

| | |
|---|---|
| Tetrahydrofuran | 70,00 Gew.% |
| Ethanol | 29,00 Gew.% |
| Eisen (III) Acetylacetonat | 0,30 Gew.% |
| Chrom (III) Acetylacetonat | 0,30 Gew.% |
| Vanadiumacetylacetonat | 0,40 Gew.%. |

In den Beispielen 1 bis 5 wurden exemplarisch fünf verschiedene Fluidansätze angegeben, wobei an dieser Stelle darauf zu verweisen ist, dass die angegebenen Gew.-%-Anteile exemplarischer Natur sind und selbstverständlich variiert werden können.
Selbstverständlich können auch andere Organo-Metall-Verbindungen miteinander kombiniert werden.

Der Brünierungsvorbehandlung schließt sich also die Fluidbehandlung, gegebenenfalls unter Berücksichtigung der Abfolge gemäß der Tabelle nach Fig. 1, an.
Figur 2 zeigt in Form einer Prinzipdarstellung einen Ausschnitt aus einem erfindungsgemäß hergestellten Bauteil in Form eines Lagerbauteils 1, beispielsweise einem Innenring. Im Brüniervorgang wird zunächst eine erste Randschicht 2 erzeugt, bestehend aus äußerst feinen Fe₃O₄-Kristalliten 3. Aufgrund des erfindungsgemäß erhöhten NaNO₂-Gehaltes im Brünierbad nimmt im Verhältnis zu dem "normalen" Brünieren die Keimbildungszahl der Fe₃O₄-Keime pro Zeiteinheit deutlich zu, das heißt, auf der Oberfläche des Lagerbauteils 1 bilden sich wesentlich mehr und wesentlich feinere Fe₃O₄-Kristallite 3 aus, so dass sich insgesamt eine fein kristallitische, eine hohe Kristallitdichte aufweisende Fe₃O₄-Randschicht 2 einstellt. Wie hier exemplarisch gezeigt ist, weist die Lauffläche 4 des originär hergestellten Lagerbauteils 1 einen Grat 5 auf, der von einer mechanischen Vorbehandlung stammt. Auch dieser Grat 5 wird zu Fe₃O₄ umgewandelt, er liegt also nicht mehr in Form eines Metallgefüges, sondern in Form von Fe₃O₄-Kristalliten vor. Die Dicke d der Fe₃O₄-Randschicht beträgt vorzugsweise rund >100 nm.

In der anschießenden Fluidbehandlung wird nun eine Metalloxidschicht 6 auf der Fe₃O₄-Randschicht 2 ausgebildet, wie in Figur 2 exemplarisch dargestellt ist. Die einzelnen Metalloxidkristalle 7, die sich aus der im Fluid vorhandenen Organo-Metall-Verbindung durch Oxidation im Bereich der Grenzfläche zur Fe₃O₄-Randschicht 2 gebildet haben, lagern sich nur lose auf der Fe₃O₄-Randschicht 2 an, es erfolgt also keine feste chemische Bindung, vielmehr ist die Haftung vermutlich über van-der-Waals-Kräfte oder die Bildung von OH-Brücken gegeben. Das heißt, die kristallitische Metalloxid-Randschicht 6 ist quasi "instabil" und nur lose gebunden, es ist also eine Relativbeweglichkeit der einzelnen Metalloxid-Kristallite 7 im Belastungsfall gegeben.

Wird nun die Lauffläche belastet, so führt dies dazu, dass es zu einer "Bearbeitung" der Metalloxid-Randschicht 6 wie auch der Fe₃O₄-Randschicht 2 kommt. Bedingt durch die aufgebrachte Last, beispielsweise über darauf laufende Wälzkörper, werden die Metalloxid-Kristallite 7 aus der lose gebundenen, gemäß Figur 2 relativ scharf abgegrenzten Metalloxid-Randschicht 6 in die Fe₃O₄-Randschicht 2 eingearbeitet, wie in Figur 3 dargestellt ist. Die Eindringtiefe in die Fe₃O₄-Randschicht kann bis zur Schichtdicke der Brünierschicht betragen, die Metalloxid-Kristallite 7 durchdringen also quasi die gesamte Fe₃O₄-Randschicht. Infolge der "Formbarkeit" der Randschichten und damit der Lauffläche bildet sich quasi eine Mischschicht aus. Ferner ist es so möglich, dass sich diese vollkommen eben ausbildet, wobei hierbei auch der Grat 5 eingeebnet wird. Denn auch dieser besteht aus Kristalliten, nämlich Fe₃O₄-Kristallen, die bei Belastung ebenfalls ein gewisses Maß relativ zueinander beweglich sind. Das heißt, die Unebenheit des Grates 5, die sich, siehe Figur 2, im Bereich der Metalloxid-Randschicht 6 fortsetzt, wird im Betrieb von selbst eingeebnet, so dass sich etwaige mechanische Inhomogenitäten von selbst beheben.

Die beiden Randschichten 2 und 6, die bei Belastung - wie Figur 3 zeigt - ineinander eingearbeitet werden, wirken sich passivierend auf das darunter befindliche Metallgefüge aus, sie sind tribomechanisch aktiv, nachdem die einzelnen Kristallitstrukturen bei Belastung relativ zueinander beweglich sind. Die Schichtdicke ist < 1µm, nachdem auch die Dicke der Metalloxid-Randschicht 6 im Bereich von <500 nm liegen sollte und es im Lagerbetrieb zu einer gewissen Kompaktierung kommt. Die erfindungsgemäß erhaltene Lauffläche mit der erfindungsgemäßen Randbeschichtung zeichnet sich durch hervorragende Laufeigenschaften infolge der tribomechanisch optimierten Lauffläche aus, woraus deutlich verbesserte Standzeiten resultieren.

### Bezugszahlenliste

- 1: Bauteil, Lagerbauteil
- 2: Randschicht
- 3: Fe₃O₄-Kristalle
- 4: Lauffläche
- 5: Grat
- 6: Metalloxidschicht
- 7: Metalloxidkristalle

## Patentansprüche

1. Verfahren zur Herstellung eines metallischen Bauteils (1), mit einer beim Betrieb des Bauteils (1) belasteten Lauffläche (4), wobei das Bauteil (1) in wenigstens einem Brünierbad enthaltend NaOH und NaNO₂ in einem Verhältnis von wenigstens 8:2 oder weniger unter Bildung einer Fe₃O₄ enthaltenden Randschicht (2) brüniert wird, und dass das Bauteil (1) mit einem Fluid enthaltend wenigstens eine Organo-Metall-Verbindung zur Bildung von Metalloxiden auf der Fe₃O₄-Randschicht (2) belegt wird, wobei eine Organo-Metall-Verbindung verwendet wird, deren organische Verbindungskomponente aus der Gruppe der Acetylacetonate, Alkoholate, Silane, Aryle, Thienyle und deren Salze gewählt ist.

2. Verfahren nach Anspruch 1, **dadurch gekennzeichnet, dass** ein Brünierbad enthaltend NaOH zu 50-600g/l und NaNO₂ zu 20-240g/l verwendet wird.

3. Verfahren nach Anspruch 1 oder 2, **dadurch gekennzeichnet, dass** die Temperatur des Brünierbads zwischen 85-140°C beträgt.

4. Verfahren nach einem der vorangehenden Ansprüche, **dadurch gekennzeichnet, dass** die Brünierung für 0,5-10 min erfolgt.

5. Verfahren nach einem der vorangehenden Ansprüche, **dadurch gekennzeichnet, dass** die Brünierung solange erfolgt, bis sich eine Fe₃O₄-Randschicht (2) mit einer Dicke von wenigstens 400nm gebildet hat.

6. Verfahren nach einem der vorangehenden Ansprüche, **dadurch gekennzeichnet, dass** eine Einbadbrünierung erfolgt, wobei das Verhältnis NaOH:NaNO₂ 3:2 beträgt.

7. Verfahren nach einem der Ansprüche 1 bis 5, **dadurch gekennzeichnet, dass** eine Zweibadbrünierung erfolgt, wobei das Verhältnis NaOH:NaNO₂ 4:2 beträgt.

8. Verfahren nach einem der vorangehenden Ansprüche, **dadurch gekennzeichnet, dass** eine Organo-Metall-Verbindung verwendet wird, deren Metall ein Metall der Scandiumgruppe, der Titangruppe, der Vanadiumgruppe, der Chromgruppe, der Mangangruppe, der Eisengruppe, der Kobaltgruppe, der Nickelgruppe, der Kupfergruppe oder der Zinkgruppe, oder der Erdmetallgruppe, der Kohlenstoff-Silizium-Gruppe, der Stickstoff-Phosphor-Gruppe, oder der Gruppe der Chalkogene oder der Lanthanoide oder Actinoide ist.

9. Verfahren nach einem der vorangehenden Ansprüche, **dadurch gekennzeichnet, dass** ein Fluid verwendet wird, das als Trägermedium für die Organo-Metall-Verbindung einen Alkohol oder ein Öl enthält.

10. Verfahren nach einem der vorangehenden Ansprüche, **dadurch gekennzeichnet, dass** ein Fluid verwendet wird, das wenigstens ein Gleitmittel enthält.

11. Verfahren nach Anspruch 10, **dadurch gekennzeichnet, dass** das Gleitmittel durch Dioctylsebacat oder Polyimid-Partikel gebildet wird.

12. Verfahren nach Anspruch 11, **dadurch gekennzeichnet, dass** Polyimid-Partikel mit einer Partikelgröße von 50nm - 10µm verwendet werden.

13. Verfahren nach einem der vorangehenden Ansprüche, **dadurch gekennzeichnet, dass** ein Fluid verwendet wird, das wenigstens einen korrosionshemmenden Zusatz enthält.

14. Verfahren nach einem der vorangehenden Ansprüche, **dadurch gekennzeichnet, dass** die Behandlung mit dem Fluid in einem Fluidbad erfolgt.

15. Verfahren nach einem der vorangehenden Ansprüche, **dadurch gekennzeichnet, dass** die Behandlung mit dem Fluid zwischen 2 und 180 min beträgt.

16. Verfahren nach Anspruch 15, **dadurch gekennzeichnet, dass** die Behandlungsdauer solange gewählt wird, bis die Dicke der Metalloxidschicht wenigstens 400nm beträgt.

17. Verfahren nach einem der vorangehenden Ansprüche, **dadurch gekennzeichnet, dass** die Temperatur des Fluids zwischen 20 und 140°C beträgt.

18. Verfahren nach einem der vorangehenden Ansprüche, **dadurch gekennzeichnet, dass** nach dem Brünieren und vor der Fluidbehandlung das Bauteil (1) in wenigstens einem Spülschritt gereinigt wird.

19. Verfahren nach Anspruch 18, **dadurch gekennzeichnet, dass** ein erster Spülschritt mit einem Spülfluid bei Raumtemperatur und anschließend ein zweiter Spülschritt mit einem Spülfluid bei einer Fluidtemperatur von 60-100°C erfolgt.

20. Verfahren nach Anspruch 18 oder 19, **dadurch gekennzeichnet, dass** die Spülbehandlung zwischen 2-10 min beträgt.

21. Verfahren nach Anspruch 20, **dadurch gekennzeichnet, dass** der erste Spülschritt 1-4 min und der zweite Spülschritt 1-6 min dauert.

22. Verfahren nach einem der vorangehenden Ansprüche, **dadurch gekennzeichnet, dass** ein zu behandelndes Bauteil (1) in einem ersten Schritt entfettet wird.

23. Verfahren nach Anspruch 22, **dadurch gekennzeichnet, dass** nach dem Entfetten ein oder mehrere Spülschritte erfolgen.

24. Verfahren nach Anspruch 23, **dadurch gekennzeichnet, dass** nach dem Spülen wenigstens ein Beizschritt erfolgt für die Dauer von 10s - 20 min bei einer Temperatur zwischen 20-50°C.

25. Verfahren nach Anspruch 24, **dadurch gekennzeichnet, dass** nach dem Beizen ein oder mehrere weitere Spülschritte erfolgen.

26. Verfahren nach einem der vorangehenden Ansprüche, **dadurch gekennzeichnet, dass** das Bauteil (1) vor dem Brünieren heißgespült wird.

## Claims

1. Process for producing a metallic component (1) having a bearing surface (4) which is stressed during operation of the component (1), wherein the component (1) is blued in at least one bluing bath containing NaOH and NaNO₂ in a ratio of at least 8:2 or below to form an Fe₃O₄-containing surface layer (2) and the component (1) is coated with a fluid containing at least one organic metal compound for formation of metal oxides on the Fe₃O₄ surface layer (2), using an organic metal compound whose organic bonding component is selected from the group consisting of acetylacetonates, alkoxides, silanes, aryls, thienyls and salts thereof.

2. Process according to Claim 1, **characterized in that** a bluing bath containing NaOH in an amount of 50-600 g/l and NaNO₂ in an amount of 20-240 g/l is used.

3. Process according to Claim 1 or 2, **characterized in that** the temperature of the bluing bath is in the range 85-140°C.

4. Process according to any of the preceding claims, **characterized in that** bluing is carried out for 0.5-10 minutes.

5. Process according to any of the preceding claims, **characterized in that** bluing is carried out until an Fe₃O₄ surface layer (2) having a thickness of at least 400 nm has been formed.

6. Process according to any of the preceding claims, **characterized in that** single-bath bluing is carried out, with the ratio of NaOH:NaNO₂ being 3:2.

7. Process according to any of Claims 1 to 5, **characterized in that** two-bath bluing is carried out, with the ratio of NaOH:NaNO₂ being 4:2.

8. Process according to any of the preceding claims, **characterized in that** an organic metal compound whose metal is a metal of the scandium group, the titanium group, the vanadium group, the chromium group, the manganese group, the iron group, the cobalt group, the nickel group, the copper group or the zinc group or the alkaline earth metal group, the carbon-silicon group, the nitrogen-phosphorus group or the group of the chalcogens or the lanthanides or actinoids is used.

9. Process according to any of the preceding claims, **characterized in that** a fluid containing an alcohol or an oil is used as carrier medium for the organic metal compound.

10. Process according to any of the preceding claims, **characterized in that** a fluid containing at least one lubricant is used.

11. Process according to Claim 10, **characterized in that** the lubricant is formed by dioctyl sebacate or polyimide particles.

12. Process according to Claim 11, **characterized in that** polyimide particles having a particle size of 50 nm-10 µm are used.

13. Process according to any of the preceding claims, **characterized in that** a fluid containing at least one corrosion-inhibiting additive is used.

14. Process according to any of the preceding claims, **characterized in that** the treatment with the fluid is carried out in a fluid bath.

15. Process according to any of the preceding claims, **characterized in that** the treatment with the fluid is carried out for from 2 to 180 minutes.

16. Process according to Claim 15, **characterized in that** the treatment time is selected so that the thickness of the metal oxide layer is at least 400 nm.

17. Process according to any of the preceding claims, **characterized in that** the temperature of the fluid is in the range from 20 to 140°C.

18. Process according to any of the preceding claims, **characterized in that** the component (1) is cleaned in at least one rinsing step after bluing and before the fluid treatment.

19. Process according to Claim 18, **characterized in that** a first rinsing step is carried out using a rinsing fluid at room temperature and a second rinsing step is subsequently carried out using a rinsing fluid at a fluid temperature of 60-100°C.

20. Process according to Claim 18 or 19, **characterized in that** the rinsing treatment is carried out for 2-10 minutes.

21. Process according to Claim 20, **characterized in that** the first rinsing step has a duration of 1-4 minutes and the second rinsing step has a duration of 1-6 minutes.

22. Process according to any of the preceding claims, **characterized in that** a component (1) to be treated is degreased in a first step.

23. Process according to Claim 22, **characterized in that** one or more rinsing steps are carried out after degreasing.

24. Process according to Claim 23, **characterized in that** at least one pickling step is carried out for a time of 10 seconds-20 minutes at a temperature in the range 20-50°C after rinsing.

25. Process according to Claim 24, **characterized in that** one or more further rinsing steps are carried out after pickling.

26. Process according to any of the preceding claims, **characterized in that** the component (1) is hotrinsed before bluing.

## Revendications

1. Procédé de fabrication d'un composant métallique (1) comprenant une surface de roulement (4) sollicitée lors de l'exploitation du composant (1), le composant (1) étant bruni dans au moins un bain de brunissement contenant NaOH et NaNO₂ en un rapport d'au moins 8:2 ou moins avec formation d'une couche de bord (2) contenant Fe₃O₄, et le composant (1) étant recouvert avec un fluide contenant au moins un composé organométallique pour la formation d'oxydes métalliques sur la couche de bord de Fe₃O₄ (2), un composé organométallique dont le composant composé organique est choisi dans le groupe constitué par les acétylacétonates, les alcoolates, les silanes, les aryles, les thiényles et leurs sels étant utilisé.

2. Procédé selon la revendication 1, **caractérisé en ce qu'**un bain de brunissement contenant NaOH à hauteur de 50 à 600 g/l et NaNO₂ à hauteur de 20 à 240 g/l est utilisé.

3. Procédé selon la revendication 1 ou 2, **caractérisé en ce que** la température du bain de brunissement est comprise entre 85 et 140 °C.

4. Procédé selon l'une quelconque des revendications précédentes, **caractérisé en ce que** le brunissement a lieu pendant 0,5 à 10 minutes.

5. Procédé selon l'une quelconque des revendications précédentes, **caractérisé en ce que** le brunissement a lieu jusqu'à ce qu'une couche de bord de Fe₃O₄ (2) d'une épaisseur d'au moins 400 nm se soit formée.

6. Procédé selon l'une quelconque des revendications précédentes, **caractérisé en ce qu'**un brunissement à un bain a lieu, le rapport NaOH:NaNO₂ étant de 3:2.

7. Procédé selon l'une quelconque des revendications 1 à 5, **caractérisé en ce qu'**un brunissement à deux bains a lieu, le rapport NaOH:NaNO₂ étant de 4:2.

8. Procédé selon l'une quelconque des revendications précédentes, **caractérisé en ce qu'**un composé organométallique est utilisé, dont le métal est un métal du groupe du scandium, du groupe du titane, du groupe du vanadium, du groupe du chrome, du groupe du manganèse, du groupe du fer, du groupe du cobalt, du groupe du nickel, du groupe du fer ou du groupe du zinc, ou du groupe des métaux de terres rares, du groupe du carbonesilicium, du groupe de l'azote-phosphore, ou du groupe des chalcogènes, ou des lanthanides ou des actinides.

9. Procédé selon l'une quelconque des revendications précédentes, **caractérisé en ce qu'**un fluide qui contient en tant que véhicule pour le composé organométallique un alcool ou une huile est utilisé.

10. Procédé selon l'une quelconque des revendications précédentes, **caractérisé en ce qu'**un fluide qui contient au moins un lubrifiant est utilisé.

11. Procédé selon la revendication 10, **caractérisé en ce que** le lubrifiant est formé par du sébacate de dioctyle ou des particules de polyimide.

12. Procédé selon la revendication 11, **caractérisé en ce que** des particules de polyimide d'une taille de particule de 50 nm à 10 µm sont utilisées.

13. Procédé selon l'une quelconque des revendications précédentes, **caractérisé en ce qu'**un fluide qui contient au moins un additif anticorrosion est utilisé.

14. Procédé selon l'une quelconque des revendications précédentes, **caractérisé en ce que** le traitement avec un fluide a lieu dans un bain de fluide.

15. Procédé selon l'une quelconque des revendications précédentes, **caractérisé en ce que** le traitement avec un fluide est compris entre 2 et 180 minutes.

16. Procédé selon la revendication 15, **caractérisé en ce que** la durée du traitement est choisie telle que l'épaisseur de la couche d'oxyde métallique soit d'au moins 400 nm.

17. Procédé selon l'une quelconque des revendications précédentes, **caractérisé en ce que** la température du fluide est comprise entre 20 et 140 °C.

18. Procédé selon l'une quelconque des revendications précédentes, **caractérisé en ce que** le composant (1) est nettoyé dans au moins une étape de rinçage après le brunissement et avant le traitement par un fluide.

19. Procédé selon la revendication 18, **caractérisé en ce qu'**une première étape de rinçage avec un fluide de rinçage à température ambiante, puis une deuxième étape de rinçage avec un fluide de rinçage à une température du fluide de 60 à 100 °C ont lieu.

20. Procédé selon la revendication 18 ou 19, **caractérisé en ce que** le traitement de rinçage est compris entre 2 et 10 minutes.

21. Procédé selon la revendication 20, **caractérisé en ce que** la première étape de rinçage dure 1 à 4 minutes, et la deuxième étape de rinçage dure 1 à 6 minutes.

22. Procédé selon l'une quelconque des revendications précédentes, **caractérisé en ce qu'**un composant à traiter (1) est dégraissé lors d'une première étape.

23. Procédé selon la revendication 22, **caractérisé en ce qu'**une ou plusieurs étapes de rinçage ont lieu après le dégraissage.

24. Procédé selon la revendication 23, **caractérisé en ce qu'**au moins une étape de décapage a lieu après le rinçage, pendant une durée de 10 secondes à 20 minutes, à une température comprise entre 20 et 50 °C.

25. Procédé selon la revendication 24, **caractérisé en ce qu'**une ou plusieurs étapes de rinçage supplémentaires ont lieu après le décapage.

26. Procédé selon l'une quelconque des revendications précédentes, **caractérisé en ce que** le composant (1) est rincé à chaud avant le brunissement.
